# EUROPEAN PATENT APPLICATION

(11) **EP 4 371 933 A1**
(43) Date of publication of application: **22.05.2024**
(21) Application number: 22290063.1
(22) Date of filing: 21.11.2022
(51) Int. Cl.: C01B 3/38, C01B 3/16, B01J 8/02, C10G 2/00

(54) **SYSTEM AND PROCESS FOR PRODUCING SYNTHESIS GAS**

(71) Applicant: Technip Energies France, 92741 Nanterre Cedex (FR)
(72) Inventor: Riegman, Jan-Jaap, 92741 Nanterre Cedex (FR)
(74) Representative: McWilliams, David John

(57) **Abstract**

System for producing synthesis gas comprising a reduced hydrogen/CO ratio, said system comprising:
- A reforming reactor (5) configured to react a hydrocarbon feed (1) together with an oxidant gas stream (4) thereby producing a reformer effluent comprising a synthesis gas stream, and
- A reverse water gas shift reactor (17) configured to receive a CO2 rich stream, a H2 rich stream and the reformer effluent and to produce a synthesis gas with a reduced hydrogen/CO ratio,
With the reverse water gas shift reactor comprising a vessel comprising:
• at least one catalyst tube configured to receive the H2 rich stream and the CO2 rich stream and to produce a shift effluent enriched in CO and H2O,
• a heat transfer zone configured to receive the reformer effluent and to transfer the heat of the reformer effluent to the catalyst tube,
and
means configured to mix the shift effluent with the reformer effluent and to produce the synthesis gas with the reduced hydrogen/CO ratio.

## Description

The invention is related to a system and a process aimed at producing a synthesis gas comprising a hydrogen/CO ratio equal to or less than 3.0 and preferably less than 2.0.

Synthesis gas, a mixture of hydrogen and carbon monoxide, is an important building block for a wide arrange of chemicals and fuels produced in downstream synthesis unit. Such products include, but are not limited to synthetic fuels, waxes, alcohols such as methanol and ethanol as well as base chemicals for polymer production. Depending on the downstream synthesis the different H2/CO ratios, for example Fisher-Tropsch synthesis depending on product and catalyst type the optimum H2/CO ratio can be as low as 0.6 for iron based catalyst or 1.8-2.1 for a cobalt based catalyst.

Synthesis gas is traditionally produced from reforming of fossil hydrocarbons such as natural gas, LPG or naphtha. The hydrocarbon feedstock is pretreated to remove impurities, before steam is added to the feedstock. The steam/hydrocarbon mixture is heated further up to the inlet temperature of the reforming section. In the reforming section the hydrocarbon and steam mixture is reacting to form a syngas mixture including hydrogen, carbonmonoxide, carbon dioxide, non reacted steam and a small amount of un converted methane as well as in case present some inerts such as nitrogen. The reaction is endothermic, so the conversion of hydrocarbons promoted by high outlet temperatures preferably at least 800C and higher. The process gas is cooled down and optionally a one or more shift reactors are present to convert CO with H2O to CO2 and H2 in order to increase the H2/CO ratio of the syngas. Condensed water is removed from the process gas and the CO2 is captured to form a CO2 depleted process gas. Depending on the desired product quality and composition further separation steps are included.

More details of various processes for producing synthesis gas with low H2/CO-ratio can be found in "Industrial scale experience on steam reforming of CO2- rich gas", P.M. Mortensen & I. Dybkjasr, Applied Catalysis A: General, 495 (2015), 141-151.

The terms "reforming" and "methane reforming" are meant to denote a reforming reaction according to one or more of the following reactions: CH4+ H20 <

CO + 3H2 (i)

CH4+ 2H20 < C02+ 4H2 (ii)

CH4+ C02 <2CO + 2H2 (iii)

Reactions (i) and (ii) are steam methane reforming reactions, whilst reaction (iii) is the dry methane reforming reaction.

For higher hydrocarbons, viz. CnHm, where n≥2, m ≥ 4, equation (i) is generalized as:

CnHm+ n H2O -> nCO + (n + m/2)H2(iv),

where n≥2, m ≥ 4

Typically, reforming is accompanied by the water gas shift reaction (v):

CO + H20 < C02+ H2 (V)

The term "steam methane reforming" is meant to cover the reactions (i) and (ii) running from the left towards the right side of the arrow (i.e. conversion of methane) , whilst the term "methanation" is meant to cover the reactions (i) and/or (ii) running from the right towards the left side of the arrow (i.e. formation of methane). Thus, the term "steam methane reforming/methanation reactions" is meant to denote the reactions (i) and (ii) running towards equilibrium. The term "reverse water gas shift" is meant to denote the reaction (v) running from the right towards the left side of the arrow. In most cases, all of these reactions are at, or close to, equilibrium at the outlet from the catalyst bed or catalyst zone of the reactor concerned.

Processes based on Autothermal Reforming (ATR) is an alternative route to production of synthesis gas, especially when a low ratio of hydrogen to carbon monoxide is required. The main elements of an ATR reactor are a burner, a combustion chamber, and a catalyst bed contained within a refractory lined pressure shell. In an ATR reactor, partial combustion of the hydrocarbon feed by sub-stoichiometric amounts of oxygen is followed by steam reforming of the partially combusted hydrocarbon feed stream in a fixed bed of steam reforming catalyst. Steam reforming also takes place to some extent in the combustion chamber due to the high temperature. The steam reforming reaction is accompanied by the water gas shift reaction. Typically, the gas is at or close to equilibrium at the outlet of the reactor with respect to steam reforming and water gas shift reactions. The temperature of the exit gas is typically in the range between 850 and 1100°C. More details of ATR and a full description can be found in the art such as "Studies in Surface Science and Catalysis, Vol. 152," Synthesis gas production for FT synthesis"; Chapter 4, p.258-352, 2004".

ATR uses oxygen and steam, and optionally also carbon dioxide, in a reaction with a hydrocarbon feed stream to form synthesis gas. The ratio of hydrogen to carbon monoxide in the exit gas depends upon the selected operation condi- tions including the amount of steam and carbon dioxide added to the hydrocar- bon feed stream and/or the ATR reactor.

The reforming section can comprise of a prereformer, steam methane reformer, an autothermal reformer or any combination thereoff. For all reforming options, increasing the amount of carbon diox- ide will decrease the hydrogen to carbon monoxide ratio in the product gas, but will also increase the size of the reactor due to the higher flow as well as increase the risk for the formation of carbon (and therefore typically requires an increase steam to carbon flowrate.

It is an object of the invention to provide a process and system for producing synthesis gas with a predetermined H2/CO ratio. It is also an object of the invention to provide a process and system for production of synthesis gas with a low H2/CO ratio, preferably without producing excess heat, i.e. utilizing the available to a maximum extent to minimize the energy input to the unit. In one object of the invention the reforming section contains a steam reforming unit, where the system and the process require a reduced fired duty input. It is furthermore an object of the present invention to provide a system and a process for production of a synthesis gas, where the reforming reactor is an ATR reactor and where the system and process has lower oxygen consumption and with a reduced size of the ATR reactor. It is also an object of the invention to provide a process and system providing a high CO production from a reforming plant. It is a further object of the invention to provide a process and system which are useful as a re- vamp of an existing process and system, in a case where it is required to change the composition of the product gas stream towards producing more car- bon monoxide from an existing process and system or for increasing the carbon monoxide production capacity.

The aim of the invention is to provide a system for producing synthesis gas with a higher CO content and with a higher flexibility in H2/CO.

A solution of the present invention is a system for producing synthesis gas comprising a reduced hydrogen/CO ratio, said system comprising:
- A reforming reactor 5 configured to react a hydrocarbon feed 1 together with an oxidant gas stream 4 thereby producing a reformer effluent comprising a synthesis gas stream, and
- A reverse water gas shift reactor 17 configured to receive a CO2 rich stream, a H2 rich stream and the reformer effluent and to produce a synthesis gas with a reduced hydrogen/CO ratio,

With the reverse water gas shift reactor comprising a vessel comprising:
- at least one catalyst tube configured to receive the H2 rich stream and the CO2 rich stream and to produce a shift effluent enriched in CO and H2O,
- a heat transfer zone configured to receive the reformer effluent and to transfer the heat of the reformer effluent to the catalyst tube,
and
means configured to mix the shift effluent with the reformer effluent and to produce the synthesis gas with the reduced hydrogen/CO ratio.

The term "reforming reactor" is meant to denote a synthesis gas generation reactor, such as i.e a steam methane reforming reactor, prereforming reaction, dry reforming reactor, an autothermal reforming reactor or a combination thereof.

The term "synthesis gas" is meant to cover a gas comprising at least hydrogen and carbon monoxide, while it also may comprise carbon dioxide, methane and steam and possibly small amounts of other gasses, such as argon, nitrogen, etc.

In an embodiment, the reforming reactor is an ATR reactor. The ATR reactor comprises a burner, a combustion chamber, and a bed of the first catalyst housed within a refractory lined pressure shell. In another embodiment, the re- forming reactor is a steam methane reforming reactor. The steam methane re- forming reactor comprises a number of tubes housing the first catalyst within a furnace with burners.

The product gas stream is a synthesis gas with the reduced hydrogen/CO ratio. The term "reduced" is used in comparison with the synthesis gas comprised in the reformer effluent. Preferably, the product gas stream is a synthesis gas comprising an H2/CO ratio below 3.0, preferably below 2.0, more preferably below 1.8, even more preferably below 1.6, and most preferably below 1.4.

The temperature of the reformer effluent is comprised between 500 and 1100°C, more preferably between 800 and 1100°C. So the reformer effluent is providing the heat for the reverse water gas shift reaction as well heating up the gas to the required exit temperature (preferably more than 750°C). The CO2 rich and hydrogen rich gasses are mixed upstream and preheated to the required inlet temperature before entering the catalyst tubes of the reverse water gas shift reactor (preferably more than 400°C, more preferably between 600 and 700°C). The preheating can be achieved by either and external heat exchanger, electrical heater or fired heater or inside the reverse water gas shift reactor by applying a heat transfer promoting non catalytic insert above the catalyst bed in the catalyst tube. The preheated CO2-H2 mixture fed through the catalyst bed inside the catalyst tubes.

The catalyst shall be high temperature resistant and active for at least the reverse water gas shift reaction and typically also for methanation reaction, although this is preferably suppressed to a minimum. The catalyst is typically Nickel based due to thermal stability as well as availability. Alternatively noble metal catalysts or Iron and/or Copper based catalyst can be applied.

Depending on the embodiment, the system according to the present invention can comprise one or more of the following features:
- the end of the catalyst tube opens in the heat transfer zone and means to mix configured to mix the shift effluent with the reformer effluent are located in the heat transfer zone of the vessel; this first configuration will then be called "option A";
- the end of the catalyst tube opens in a zone comprised in the vessel and fluidically isolated from the heat transfer zone and means to mix the shift effluent with the reformer effluent are located at the reverse water gas shift reactor outlet; This second configuration will then be called "option B";
- The system comprises a CO2 capture unit 7 configured to receive the synthesis gas with the reduced hydrogen/CO ratio and to produce CO2 stream and a synthesis gas depleted in CO2 and with the reduced hydrogen/CO ratio, and preferably the catalyst tube is configured to receive a CO2 stream coming at least in part from the CO2 capture unit 7;
- the system comprises a gas separator 9 configured to receive the synthesis gas stream with the reduced hydrogen/CO ratio and to produce a H2 rich stream and a synthesis gas or CO stream, and the catalyst tube of the reverse gas shift reactor is configured to receive at least a part of this H2 rich stream coming from the gas separator 9;
- the system comprises an external hydrogen source and the catalyst tube of the reverse gas shift reactor received an H2 rich stream coming from the gas separator and hydrogen coming from the external hydrogen source;
- the top of the catalyst tube is filled with a catalytically inactive heat transfer enhancing component;
- the system comprises a hydrocarbon feed purification section 3 upstream the reforming reactor;
- the system comprises means to mix the hydrocarbon feed with an oxidant stream upstream the reforming reactor. By "means to mix" we mean for example a mixing tee;
- the CO2 capture unit is selected from an amine adsorption unit, a carbonate solution adsorption unit, a cryogenic unit, a membrane unit, electrochemical compression, temperature swing adsorption or a pressure swing adsorption unit;
- the reforming reactor comprises one or a combination of the following reforming units: prereformer, steam methane reformer, dry methane reformer, autothermal reformer or partial oxidation.

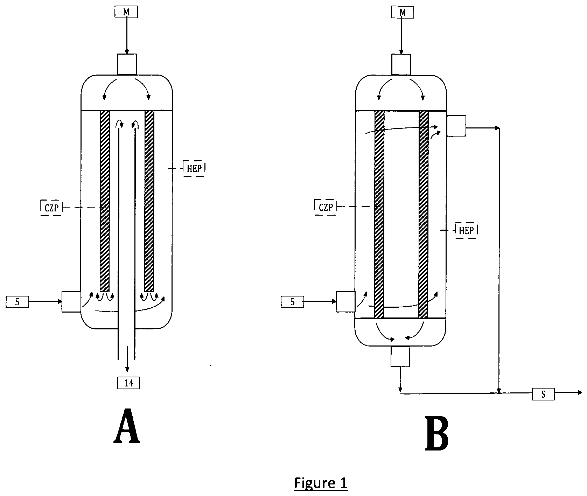

The figure 1 schematically indicates the two configurations (option A and option B) for the reverse water gas shift reactor. The preheated mixture of the CO2 rich stream and the H2 rich stream (M) enters the catalyst tubes at minimum 400°C, preferably more than 600°C or more preferably more than 650°C to minimize methane formation as well as the risk for carbon formation. In case the top part of the catalyst tubes is utilized as a heat transfer promoted zone without catalytically active material (HZP), the inlet temperature can be lower, minimum ambient temperature, and the heat transfer promoted zone is sized such that the catalyst bed inlet temperature is minimum 400°C, preferably more than 600°C or more preferably more than 650°C. The catalyst zone (CZP) comprised in the catalyst tubes reacts CO2 with H2 to form CO and H2O following the reverse water gas shift reaction. As a side product some methane is formed through the methanation reaction. The outlet temperature of the catalyst bed (shift effluent) shall be at least 500°C and more preferably mor than 750°C and or preferably more than 850°C or typically up to 1000°C to maximize CO2 conversion as well as minimizing the methane formation. With option A, the end of the catalyst tube opens in the heat transfer zone and means to mix the shift effluent richer in CO and H2O with the reformer effluent are located in the heat transfer zone. By "means to mix Cshift effluent with the reformer effluent", we mean a mixing volume inside the reverse water gas shift reactor below the catalyst tube outlet and at the location of the reformer effluent inlet. Thus, the synthesis gas with a reduced hydrogen/CO ratio is formed in the heat transfer zone (HTZ). The temperature of the synthesis gas with a reduced hydrogen/CO ratio is comprised between 400 and 900°C at the outlet of the heat transfer zone. And it is collected in a collector pipe to exit the reactor (S). The collector can be either direct at the outlet of the heat transfer zone (l.e. at the top below the catalyst tube tubesheet) or located inside the reverse water gas shift reactor between the catalyst tubes and at the opposite of the catalyst tubes outlet. The later is a preferred solution in case of revamps scenarios as it there is less mechanical stresses and easier routing to connect to existing equipment. In option A, the reverse water gas shift reactor has thus two inlet stream and one outlet stream. The major benefit of this concept in relation to reverse water gas shift is the reduced potential for carburization by diluting the CO rich shift effluent with the less carbon rich reformer effluent and thus reducing the partial pressure of CO compared to the shift effluent.

Alternatively, option B can be applied. In this concept the preheated mixture CO2-H2 (M) reacts in the catalyst zone (CZP) of the catalyst tubes under equal conditions as for concept one, but the end of the catalyst tube opens in a zone comprised in the vessel and fluidically isolated from the heat transfer zone and means to mix shift effluent with the reformer effluent (to provide a synthesis gas with a reduced hydrogen/CO ratio (S))are located at the reverse water gas shift reactor outlet and not in the reverse water gas shift reactor. Thus the shift effluent exits the reactor in a separate stream. The advantage of this concept is that a slightly higher temperature compared to option A. In fact, the heating gas is directly the reformer effluent before mixing with the shift effluent and thus 10-50°C higher reverse water gas shift catalyst outlet temperature compared to option A is feasible. Additional produced synthesis gas with a reduced hydrogen/CO ratio can be further processed separately. I.e. the shift effluent can be decoupled from the reforming section. Alternatively the two products can be combined. As the reverse water gas shift reactor has a high potential for carburization the outlet system should be designed in accordance with this. Preferably, the reverse water gas shift catalyst tubes are coated to protect against carburization/ metal dusting. Alternatively, materials that have a low level of susceptiveness to carburization can be selected.

In one particular scenario, where the reverse water gas shift reactor inlet temperature is relatively low i.e below 400°C or preferably below 600°C and higher inlet temperatures of the catalyst bed is preferred, the top part of the tubes could be filled with an heat transfer enhancing catalytically non active inert component to first increase the CO2- H2 mixture temperature before entering the catalyst bed. Such inert layer could be for example ceramic balls or a metal insert promoting turbulence. This is particularly beneficial if the inlet temperature of the reverse water gas shift reactor is lower than 400°C, especially lower than 300°C or even down to as low as ambient temperature.

Another object of the present invention is a process for producing synthesis gas comprising a reduced hydrogen/CO ratio, said process implementing a system according to the present invention and comprises:
a) Reforming step 5 of a hydrocarbon feed 1 with an oxidant gas stream 4 to produce a reformer effluent comprising a synthesis gas stream,
b) Heating step of the catalyst tube of the of the reverse water gas shift reactor by exchange with the reformer effluent,
c) Reverse water gas shift reaction step of a CO2 rich stream and a H2 rich stream in the catalyst tube of the reverse water gas shift reactor to produce a shift effluent enriched in CO and H2O, and
d) Mixing step of the shift effluent with the reformer effluent to produce a synthesis gas with the reduced hydrogen/CO ratio.

Depending on the embodiment, the process according to the present invention can comprise one or more of the following features:
- The process comprises after step d) a step e) of capture of CO2 comprised in the synthesis gas coming from step d) to produce CO2 stream and a synthesis gas depleted in CO2 and comprising the reduced hydrogen/CO ratio, and at step c) the CO2 rich stream coming at least in part from step e);
- The process comprises after step e) a separation step f), preferably a cryogenic separation step, to separate a H2 rich stream and a synthesis gas or CO stream from the synthesis gas stream coming from step d) or e), and at step c) the H2 stream comes at least partially from step f); the offgas 12 of the separation step, typically rich in methane, can be recycled to step a) or combusted in a fired heater. In case the syngas is too rich in hydrogen, a hydrogen permeating membrane can also be include to reduce the H2/CO ratio to the desired ratio in the syngas
- The process comprises a purification step 3 of the hydrocarbon feed 1 before the reforming step 5; preferably the purification step is selected from the following steps: hydrogenation step, dehalogenation step, desulfurization step or metallization step;
- The process comprises a mixture step of the hydrocarbon feed 1 with an oxidant stream 4 before the reforming step 5;
- The process comprises a cooling step of the synthesis gas coming from step d), ), preferably a cooling step at a temperature between 900 and 300°C and is typically cooled down to 30-50°C to knock out water and to the operating temperature of the next processing step, for example e) or the separation, The cooling down is achieve by heat exchanger for for example feed preheating, steam generation and superheating and BFW preheating. The heat recovery is typically maximized in order to minimize the external energy demand for the syngas generation;
- at step c) the CO2 rich stream and the H2 rich stream are introduced in the catalyst tube at a temperature higher than 400°C, preferably higher than 600°C, in case of lower temperature a heat transfer non catalytically active layer is included on top of the catalyst to ensure the desired catalyst operating temperature;
- the reformer effluent is at a temperature comprised between 700 and1100°C.

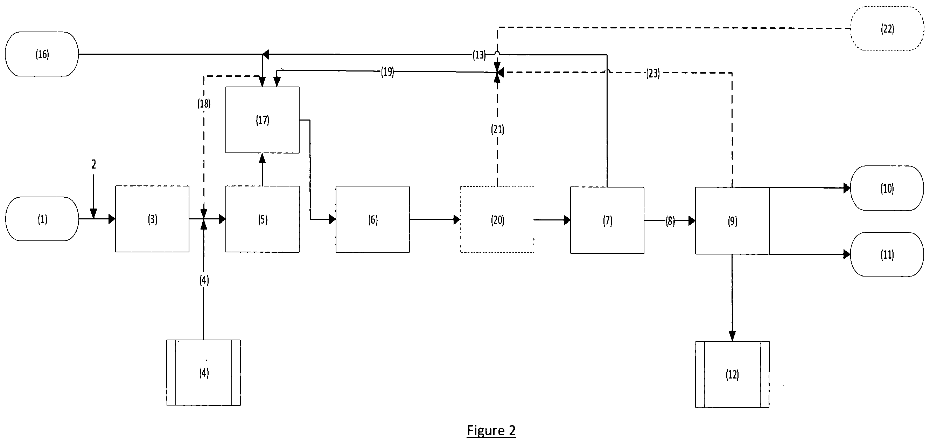

The figure 2 illustrate the process according to the present invention including optional features.

Like in a traditional syngas production plant (HyCO) a hydrocarbon feedstock 1, typically natural gas, LPG, light naphtha or an offgas, is pretreated in a purification section 3. The purification section can consist for example of a hydrogenation, dehalogenization, desulfurization or metal guard step. For multiple of these steps some (recycle) hydrogen 2 can be added to the feed upstream the purification section. The purified hydrocarbon stream is subsequently mixed with an oxidant stream 4. Typically a preferred oxidant is steam, though CO2 can also be applied, depending on the selected reforming application. The mixed feedstock is fed to the reforming reactor 5.

The reforming reactor (5) can consist of either of the following components or a combination thereof: Prereformer, steam reformer, autothermal reformer or partial oxidation. In a preformer the hydrocarbon feedstock reacts with steam to form a methane rich reformate stream at a temperature typically between 450-700°C. In a steam reformer the hydrocarbon reacts with steam according to the steam reforming reaction. This is typically applied in a (multi)tubular reactor where the heat is either provided by a firebox, high temperature effluents (so called gas heated reformer) or electrically with outlet temperature typically between 750-1000°C. In Autothermal reforming (ATR), the hydrocarbon reacts with O2 coming from air, enriched air or purified oxygen in combination with an oxidizing agent as CO2 or H2O followed by catalytic bed active for the reforming reaction. A typical outlet temperature is between 900-1100°C. Partial oxidation reacts with oxygen without the presence of an oxidizing agent and obtain outlet temperatures up to typically 1300°C.

The reformer effluent is subsequently fed to the reverse water gas shift reactor 17, comprising of a heat exchanger reactor, to supply the required duty for the reverse water gas shift reaction. A CO2 rich stream 13 and a hydrogen rich stream 19 are mixed and preferably first preheated before being fed to the reverse water gas shift reactor. A preheater of the CO2-H2 mixture is essential to reach the required operating conditions in the reverse water gas shift catalyst unit and is at least 400°C, preferably more than 600°C or more preferably more than 650°C to minimize methane formation as well as minimizing the risk of carbon formation. To achieve the preheating, this can be done in several ways including feed/effluent exchanger with reformer effluent (synthesis gas stream) or crude syngas, a fired heater (or heat integration in the convection section for example in a steam reforming process) or an electrical heater. Alternatively (part) of the preheating can be done inside the reverse water gas shift reactor tubes, in a dedicated non catalytically active preheating zone before entering the reverse water gas shift catalyst bed within the same tube. The preheating zone is then sized such to achieve an inlet temperature of the catalyst bed of at least 400°C, preferably more than 600°C or more preferably more than 650°C.

Depending on the required product syngas ratio as well as depending on the availability of import hydrogen and CO2 feedstocks the ratio of CO2 to H2 in the feed reverse water gas shift reactor is between 1:0.5 to 1:4, particularly interesting is a CO2:H2 ratio of 1:1 to 1:2. A lower concentration of hydrogen limits the conversion of CO2, while a higher concentration of hydrogen increases the amount of methane formed.

The operating pressure for the reverse water gas shift reactor unit is determined by the downstream operating pressure and is typically between 2-100 bar in particular between 20-40bar. At a higher pressure the methane concentration in the product increases slightly according to Le Chattelier's principle. In addition to hydrogen and CO2 in the feed some co-feeding of steam can applied to risk carbon formation and methane formation. However, as this also negatively impacts the conversion of CO2, steam addition is normally limited to maximum 40% of the feed flowrate, though preferably less than 20% and more preferable less than 5% is applied. An amount of methane can also be allowed up to max 20 % of the feed flowrate, more preferable less than 5%. However, the actual limit depends on the operating conditions as methane in the feed increases the risk of carbon formation and subsequential catalyst failure. It should also be noted that as the catalyst is active for methanation the catalyst is also active for steam methane reforming and therefore methane can also be converted with steam to form CO and H2, although this negatively impacts the conversion of CO2 as per le Chatellier's principle.

The CO2 rich stream contains at least 70% of CO2 and preferably more than 95% or even more preferably more than 99% of CO2. The CO2 rich stream can be imported 16 and another part can come from the CO2 capture unit 7. The import CO2 can be from any CO2 source, for example a point source for carbon capture from industrial process are CO2 from a biogenic source. The CO2 source shall be essentially free of poisons for the catalyst of the reverse water gas shift reactor (for example amine, sulfur or heavy hydrocarbons). In case these poisons are present in CO2 rich feed some additional pretreatment steps for the CO2 might be required. As CO2 is formed in the reforming section (5) as well as a remaining CO2 from the Reverse water gas shift reaction step due to partial conversion only (equilibrium limited reaction), there is still a significant amount of CO2 present in the synthesis gas with the reduced hydrogen/CO ratio, preferably comprising the hydrogen/CO ratio equal to or less than 3 more preferable equal or less than 2 named "crude syngas", at typically 1-20 vol% on dry basis. Therefore, the crude syngas is cooled down in a cooling train section 6 and subsequently optionally treated in a CO2 capture unit 7. The captured CO2 13 is typically compressed and applied as a feedstock for the reverse water gas shift reactor 17 but a part 18 of the captured CO2 can be can also be applied as a partial oxidant in the reforming reactor 5. The CO2 capture unit can be any available technology to capture CO2 from syngas, for example an amine adsorption unit, a carbonate solution adsorption unit, a cryogenic unit, a membrane unit, electrochemical compression, temperature swing adsoprion or a pressure swing adsorption unit.

The hydrogen required for the reverse water gas shift step can be either produced inside the system in the gas separator 9 or imported 22. The imported hydrogen rich gas could be originating from another process unit, but is preferably 'green' hydrogen, for example produced from electrolysis of water with renewable electricity. The hydrogen produced inside the unit is produced in the reforming section (5), also resulting from partial conversion of the hydrogen in the reverse water gas shift reactor. Some hydrogen remains in the crude syngas. After cooling the crude syngas can be optionally fed to a crude hydrogen separation unit 20, this is particularly beneficial if the H2/CO ratio of the syngas is higher than the desired product ration. In the crude hydrogen separation unit, a hydrogen rich stream is separated from the crude syngas stream by for example a hydrogen permeating membrane. In a particular advantageous case, some of the CO2 from the crude syngas is separated together with the hydrogen. It is preferred to minimize the carbon monoxide and water in the recycle stream and limit methane and water within the allowable limits in the feedstock. In case the crude hydrogen separation unit is present the CO rich product stream is optionally fed to the CO2 capture unit. The additional benefit of this crude separation unit is that the gas flowrate through the CO2 capture unit and downstream syngas purification unit is reduced and thus the sizing and energy consumption is smaller.

The synthesis gas depleted in CO2 and comprising the hydrogen/CO ratio equal to or less than 3 preferably equal or less then 2, called "CO2 depleted syngas" is fed to a gas separator 9 to remove residual impurities to the meet the product specification in case the purity is not within the allowable product specification. These impurities typically include Argon, Nitrogen, Methane, residual water or CO2 if any. Additionally, the purification unit can optionally also separate the syngas in a high purity CO stream 10, preferably >80vol% purity, more preferably >95vol%, even more preferably >99% purity, and high purity hydrogen stream 11, preferably >80vol% purity, more preferably >95vol%, even more preferably >99% purity. if required. The removed impurities form an offgas stream 12. This offgas stream can either be export to the fuel gas network, internally used for a fired heater (for example the radiant section of a steam reformer) or recycled to the feed purification section or upstream the reforming section. The last option is particularly beneficial if the amount of methane is significant as the reforming section produces additional hydrogen from the methane as well as closing the carbon loop of the system. A small purge stream is then required to prevent built-up of inerts such as nitrogen or argon. Instead of or in combination with hydrogen from the crude hydrogen separation unit or import hydrogen, the high purity hydrogen stream 23 can also be recycled to the reverse water gas shift reactor 17.

The gas separator 9 can be any available technology. Typically a drier followed by a cryogenic coldbox is preferred, but an electrochemical compression unit, a pressure swing adsorption unit, a vaccuum swing adsorption unit, a membrane separation unit or a combination thereof have for example also been applied for such separation.

The table 1 shows the results for an example case of the current invention compared with other existing alternatives. All examples are based on a steam reforming process with a reforming catalyst outlet temperature of 930°C. The feedstock is natural gas and the overall steam to carbon ratio is 2.0 mol/mol at the reforming reactor inlet. The reformer effluent (for base case and case 1) or reverse water gas shift reactor effluent (case 2 and 3) is cooled down and more than 99.9% of the CO2 is captured before being fed to a cryogenic separation unit to produce high purity hydrogen and CO. All offgas from the cryogenic unit is supplied to the burners in the radiant section of the steam reformer and additional make-up fuel is natural gas. In this example the air supplied to the reformer combustion in the radiant section is kept constant preheating temperature of 500°C and excess steam produced is exported to outside battery limits. Further heat integration is possible to optimize the firing as well as export steam. The below table includes the following examples.

### Base case: traditional steam reforming without CO2 recycle

Case 1: Typical traditional syngas production plant with steam reforming applying CO2 recycle to the reformer feed. Additionally a parallel heat exchanger reformer in applied to process part of the reformer feedstock in parallel to the fired heater in order to reduce the firing required in the radiant section. There is no CO2-H2 mixture in this case. The parallel heat exchanger reformer is literally doing part of the reforming in parallel to the main steam reformer. There is no external CO2 import in this case
Case 2: steam reforming as per base case with adiabatic post converter applying both recycle CO2 as well as import CO2 from outside the system, as described WO2019/110267. The import CO2 is preheated to 600°C in the convection section of the reforming unit.
Case 3: Present invention with reverse water gas shift reactor with a catalyst outlet temperature of 900°C and applying both recycle CO2 and import CO2 from outside the system according to the inventioin. The hydrogen for reverse water gas shift reactor is internally produced and recycled. The feed (a mixture H2 rich stream and the CO2 rich stream) to the reverse water gas shift reactor is preheated to 500°C and applied a CO2.H2 ratio of 1.0.

**Table 1**

| | Base case | Case 1 | Case 2 | Case 3 |
|---|---|---|---|---|
| H2/CO of syngas ratio to purification section | 4.1 | 3.1 | 1.8 | 1.8 |
| (mol/mol) | | | | |
| H2/CO of syngas ratio in product | 2.8 | 2.1 | 1.2 | 1.2 |
| (mol/mol) | | | | |
| NG (natural gas) consumption (feed + fuel) per CO product | 0.93 | 0.71 | 0.56 | 0.53 |
| (kg/kg) | | | | |
| CO2 import per CO product | | | 0.5 | 0.5 |
| (kg/kg) | | | | |
| CO2 emission per CO product | 0.50 | 0.33 | 0.41 | 0.35 |
| (kg/kg) | | | | |
| Export Steam per CO product | 1.9 | 0.3 | 0.4 | 0.4 |
| (kg/kg) | | | | |
| Steam to Carbon ratio in reformer | 2.0 | 2.0 | 2.0 | 2.0 |
| (mol/mol) | | | | |
| CO2 to carbon ratio in reformer | | 0.34 | | |
| (mol/mol) | | | | |
| H2/CO2 ratio in reverse water gas shift reactor | | | | 1.0 |
| (mol/mol) | | | | |
| CO2 recycle per CO product | 0 | 0.62 | 1.12 | 0.85 |
| (kg/kg) | | | | |
| Methane slip to coldbox (vol%) | 4.5 | 3.5 | 7.2 | 5.6 |

The base case described clearly indicates that for a conventional steam reforming plant the H2/CO ratio is high at >4.0mol/mol. For many processes a lower stoichiometric ratio of around 2.0mol/mol is required and therefore this results in additional hydrogen which is often not required. As all the carbon in the CO product comes from the natural gas feed in the base case, the NG consumption per CO produced is also quite high. In case one the CO2 produced in the process is captured, compressed and recycled to upstream the reformer feed. This is often applied in syngas plants to shift the water gas shift equilibrium more towards CO in the reforming reactor. In this example also a parallel heat exchanger reformer is applied to convert part of the reformer feed while being heated with the reformer effluent and thereby reduce the firing in the steam reformer. This represents a typical high efficiency syngas production plant. Compared to the base case the H2 /CO ratio in the crude syngas is reduced to ~3.0 mol/mol. Additionally the NG consumption per CO produced reduces by 24%. It should be noted that the CO2 to carbon ratio in the inlet of the reformer is now present at 0.34 mol/mol. With an increased amount of CO2 in the reformer the risk of carbon formation increases and consequently import CO2 in these cases is often not possible without significantly increasing the steam to carbon ratio (and consequently increase NG consumption and CO2 recycle and consequently a higher energy consumption in the unit).

In case 2 this issue related to the carbon formation in the reforming section is overcome by applying a adiabatic post converter as described in known art. The captured CO2 is still recycled, but additional import CO2 can be applied as the methane reforming reactor upstream already converts the methane and steam into hydrogen and CO and thereby being outside the carbon formation limits. The example shows a clear reduction of H2/CO ratio which is 1.8 in the crude syngas. However as the CO2 is directly mixed with the reformer effluent before entering the post converter catalyst bed, the added CO2 only partially converts to CO through a reverse water gas shift reaction resulting from the water gas shift equilibrium. This is clearly visible in the significant increase of CO2 recycle required at almost double the flow of case 1. Additionally, the CO2 feed also results in partial methanation and as the temperature drops with more CO2 fed to the unit, the more methane is formed.

Case 3 shows the benefits for the present invention, where similarly to case 2, the carbon formation risk in the reforming section is avoided by feeding CO2 in a separate reactor and thus operating the reforming section outside the carbon formation zone. And similar to case 2, at equal CO2 import the same H2/CO ratio is achieved. Compared to case 1, the NG consumption reduces by 25% as part of the CO is generated from CO2 import. There is also a 5% reduction in NG consumption compared to case 2, this is resulting from a higher conversion of CO2 and consequently less firing required in the reforming section. This is also observed in the amount of recycle CO2 which compared to case 2 is 25% lower and compared to case 1 37% higher. As the increase of CO2 recycle is proportional with the CO2 import increase it also highlights that the conversion of CO2 is more attractive in a separate reverse water gas shift catalyst bed instead if mixed with the reforming effluent. The downside is that in the reverse water gas shift reactor some methane is formed from the import CO2 as is shown in the increase in methane slip, however the increase is relatively modest. In case of recycling of the methane rich offgas this could be reduced further. In the crude syngas purification unit, the methane is separated from the syngas and utilized internally as a fuel in the reformer, thereby reducing the natural gas demand. The overall CO2 emissions are significantly lower than the base case and in a similar order of magnitude as case 1. In case CO2 is form a biogenic source, the related CO2 emission might even be excluded.

It should be noted that in case the reformer section consist of an autothermal reformer, the selected S/C ratio upstream the reforming section for a syngas production plant is typically lower than for a steam reforming plant (typically down to 1.2 mol/mol) and consequently CO2 recycle is even more limiting, showing more significant benefits for the alternatives like described in case 2 and case 3. Additionally advantageous for the current invention is the higher outlet temperature of the ATR, allowing also a higher tube outlet temperature for the reverse water gas shift reactor. The higher outlet temperature would further increase the conversion of CO and significantly reduce the methane formed in the reverse water gas shift reactor.

This second example (Table 2) shows the application of reverse water gas shift in a bio-based refinery where some of the processes have a hydrocarbon containing offgas. Case 1 is based on a standalone reverse water gas shift unit that utilizes CO2 and hydrogen as a feedstock and the hydrocarbon containing offgas is utilized for power generation in a combined cycle gas turbine. Case 2 represents the present invention where the offgas is utilized as a feedstock for the reforming section of the reverse water gas shift unit. In both case the feed to the reverse water gas shift reactor is optimized to ensure a H2:CO ratio of 2.0 in the product syngas.

**Table 2**

| | Case 1 | Case 2 |
|---|---|---|
| Hydrocarbon rich offgas [KTPA] | 121* | 121 |
| Syngas flowrate [kNm3/h] | 100 | 100 |
| CO2 import [KTPA] | 659 | 361 |
| H2 import [KTPA] | 83 | 62 |
| Power [GWh per year] | 4400* | 4000 |
| Direct CO2 emissions [KTPA] | 300* | 0 |

| | | |
|---|---|---|
| * Offgas is used for power generation at a 50% efficiency for combined cycle. The power is subtracted from the overall power requirement. The direct emissions are also related to the offgas combusted for power generation. | | |

The example clearly indicates that for the same offgas consumption and syngas production (at a H2/CO of 2:1), both the CO2 import required as well as the H2 import required is significantly lower at respectively ~80% and ~33% reduction for the present invention compared to a standalone reverse water gas shift process. As Hydrogen production is typically expected by electrolysis using renewable electricity (so called green hydrogen), the hydrogen is the major contributor to the overall power consumption even taking into account the power generated by the combustion of the hydrocarbon rich offgas the reduction in overall power consumption is still ~10% from the standalone reverse water gas shift reactor versus the current invention. Without the power generation it would be more than 25% reduction. As the exhaust of the power generation unit is typically emitted to the atmosphere this also corresponds to direct CO2 emissions, which are not present in the current invention. Overall the total energy input as well as carbon footprint of the current invention is significantly lower than the standalone reverse water gas shift reactor for cases where hydrocarbons (such as hydrocarbon rich offgasses) are available.

The present invention in short provides significant benefits compared to alternative routes and is an efficient CO2 utilization route that can readily be applied to new as well as existing units. The process avoids the risk of carbon formation and effectively utilizes high level heat from reforming processes to convert CO2 into CO. The process can achieve H2 CO ratio's <2.0 and if required even up to pure CO is achievable. The direct carbon footprint is comparable to state of the art current process, but requires significantly less fossil fuel to achieve the same syngas product flowrate and thus has a lower overall carbon footprint.

The process allows for a high degree of flexibility in the design. Depending on the required product composition as well as the feedstock availability the process can be adapted. One important variable is the feedstock to the reverse water gas shift reactor. Increasing the CO2 rich feed flowrate to the reverse water gas shift reactor allows for more conversion of CO2 and thus a lower H2/CO ratio. An increased hydrogen to CO2 ratio allows for some more CO2 conversion and thus less CO2 in the product, typically this also results in an increase H2/CO ratio. The process can thus also be applied to control the product H2/CO ratio to the optimum conditions for the downstream unit(s) and even adjust it to other processes if required. This is especially beneficial if the feedstock of the reforming section is variable in nature. For example, the plant has multiple feedstocks such as naphtha and natural gas and the feedstock is selected based on availability. As naphtha feed has a significantly lower C/H ratio than natural gas, consequently the syngas H2/CO ratio becomes lower than for NG feed. By adjustment of the feed flowrate of the reverse water gas shift reactor, the product can be kept at a constant ratio. Also for bio-based feedstock or offgasses, the range of concentrations of each components is typically higher than for traditional fossil feedstocks and therefore more variations in the conditions are expected. The product syngas can be maintained within a constant range by adjusting the reverse water gas shift feed composition and flowrate. This thereby allows continuous optimization of the downstream units and thus an increased overall efficiency in producing the final product. The same flexibility in operating conditions also allows for more flexibility in the operation at a larger range of capacities.

To summarize, in the present invention, the presence of the reverse water gas shift reactor allows for a high flexibility in the H2/CO ratio in the product. By addition of more or less CO2 and recycle hydrogen the product syngas purity can be adjusted in a wide range. This has two main advantages:
- The downstream process can be optimized depending on the process parameters or the syngas can be applied for multiple downstream applications. For example if the syngas is applied for Fisher Tropsch synthesis, the product composition depends on the operating conditions and syngas ratio. The syngas ratio can thus be optimized to generate the most favorable product distribution.
- The process significantly decreases the import hydrogen flowrate and thus the electricity demand for electrolysis compared to a standalone reverse water gas shift process. This is especially beneficial in case hydrocarbon rich offgasses are available from the downstream units.
- The process allows to easily maintain a constant H2/CO ratio for different feedstock. For example light naphta feed is much more carbon rich than an offgas or natural gas feed. A conventional syngas generation unit would therefore result in a large difference in syngas ratio, while in the disclosed concept more CO2 import can be applied relative to the feed to increase the carbon content.

Moreover, the invention allows for operation at low S/C ratio and thus higher overall efficiency of the unit without risking carbon formation in the reforming section. As there is no additional CO2 fed to the reforming section this is no limitation and the reverse water gas shift reactor is in parallel with the reforming section and has no/limited methane in the feed and thus no risk for carbon formation over the catalyst bed.

Additionally, the mixing of the effluent of the reverse water gas shift reactor with reformer effluent helps to reduce potential for carburization.

The process can also be applied to any reforming technology which can include either prereformer, steam methane reformer, dry reformer, autothermal reformer or partial oxidation or a combination of multiple of these technologies.

The process according to the invention allows for CO2 utilization without the need of import hydrogen and can be applied in both new as well as revamp application of a hydrogen/syngas plant.

H2/CO ratios in the crude syngas lower than 3 are easily achievable and as many downstream process require a H2/CO ratio equal or less than 2.0, this is highly beneficial and thus reduce hydrocarbon consumption. Ratio of H2/CO of 1.0 or even only CO is also feasible with sufficient import CO2 available.

The CO2 conversion in the reverse water gas shift reactor is higher compared to alternatives and thus the CO2 capture unit and recycle size is minimized.

## Claims

1. System for producing synthesis gas comprising a reduced hydrogen/CO ratio, said system comprising:
- A reforming reactor (5) configured to react a hydrocarbon feed (1) together with an oxidant gas stream (4) thereby producing a reformer effluent comprising a synthesis gas stream, and
- A reverse water gas shift reactor (17) configured to receive a CO2 rich stream, a H2 rich stream and the reformer effluent and to produce a synthesis gas with a reduced hydrogen/CO ratio,
With the reverse water gas shift reactor (17) comprising a vessel comprising:
• at least one catalyst tube configured to receive the H2 rich stream and the CO2 rich stream and to produce a shift effluent enriched in CO and H2O,
• a heat transfer zone configured to receive the reformer effluent and to transfer the heat of the reformer effluent to the catalyst tube,
and
means configured to mix the shift effluent with the reformer effluent and to produce the synthesis gas with the reduced hydrogen/CO ratio.

2. System according to claim 1, wherein the end of the catalyst tube opens in the heat transfer zone and means to mix configured to mix the shift effluent with the reformer effluent are located in the heat transfer zone of the vessel.

3. System according to claim 1, wherein the end of the catalyst tube opens in a zone comprised in the vessel and fluidically isolated from the heat transfer zone and means to mix the shift effluent with the reformer effluent are located at the reverse water gas shift reactor outlet.

4. System according to any of the claim 1 to 3, wherein:
- The system comprises a CO2 capture unit (7) configured to receive the synthesis gas with the reduced hydrogen/CO ratio and to produce CO2 stream and a synthesis gas depleted in CO2 and with the reduced hydrogen/CO ratio, and
- Preferably the catalyst tube is configured to receive a CO2 stream coming at least in part from the CO2 capture unit (7).

5. System according to any of the claims 1 to 4, wherein:
- the system comprises a gas separator (9) configured to receive the synthesis gas stream with the reduced hydrogen/CO ratio and to produce a H2 rich stream and a synthesis gas or CO stream, and
- the catalyst tube of the reverse gas shift reactor is configured to receive at least a part of this H2 rich stream coming from the gas separator (9).

6. System according to claim 5 , wherein the system comprises an external hydrogen source and the catalyst tube of the reverse gas shift reactor received an H2 rich stream coming from the gas separator and hydrogen coming from the external hydrogen source.

7. System according to any of the claims 1 to 6, wherein the top of the catalyst tube is filled with a catalytically inactive heat transfer enhancing component.

8. System according to any of the claims 1 to 7, wherein the system comprises a hydrocarbon feed purification section (3) upstream the reforming reactor.

9. System according to any of the claims 1 to 8, wherein the system comprises means to mix the hydrocarbon feed with an oxidant stream upstream the reforming reactor.

10. Process for producing synthesis gas comprising a reduced hydrogen/CO ratio, said process implementing a system according to any of the claims 1 to 9 and comprises:
a) Reforming step (5) of a hydrocarbon feed (1) with an oxidant gas stream (4) to produce a reformer effluent comprising a synthesis gas stream,
b) Heating step of the catalyst tube of the of the reverse water gas shift reactor by exchange with the reformer effluent,
c) Reverse water gas shift reaction step of a CO2 rich stream and a H2 rich stream in the catalyst tube of the reverse water gas shift reactor to produce a shift effluent enriched in CO and H2O, and
d) Mixing step of the shift effluent with the reformer effluent to produce a synthesis gas with the reduced hydrogen/CO ratio.

11. Process according to claim 10, wherein:
- it comprises after step d) a step e) of capture of CO2 comprised in the synthesis gas coming from step d) to produce CO2 stream and a synthesis gas depleted in CO2 and comprising the reduced hydrogen/CO ratio, and
- at step c) the CO2 rich stream coming at least in part from step e).

12. Process according to claim 10 or claim 11, wherein:
- it comprises after step e) a separation step f) to separate a H2 rich stream and a synthesis gas or CO stream from the synthesis gas stream coming from step d) or e), and
- at step c) the H2 stream comes at least partially from step f).

13. Process according to claim 10 to 12, wherein it comprises a purification step (3) of the hydrocarbon feed (1) before the reforming step (5).

14. Process according to any of the claims 10 to 13, wherein it comprises a mixture step of the hydrocarbon feed (1) with an oxidant stream (4) before the reforming step (5).

15. Process according to any of the claims 10 to 14, wherein it comprises a cooling step of the synthesis gas coming from step d).

16. Process according to any of the claims 10 to 15, wherein at step c) the CO2 rich stream and the H2 rich stream are introduced in the catalyst tube at a temperature higher than 400°C.
